# EUROPÄISCHE PATENTANMELDUNG

(11) **EP 1 130 170 A2**
(43) Veröffentlichungstag der Anmeldung: **05.09.2001**
(21) Anmeldenummer: 01100109.6
(22) Anmeldetag: 12.01.2001
(51) Int. Cl.: E01F 15/14, B60R 19/00

(54) **An ein Fahrzeug heckseitig anbaubare Strassensperre**

(30) Priorität: 05.02.2000 DE 10005223
(71) Anmelder: Rossmann, Michael, 82547 Beuerberg (DE)
(72) Erfinder: Rossmann, Michael, 82547 Beuerberg (DE)
(74) Vertreter: Weinmiller, Jürgen

(57) **Zusammenfassung**

Die Erfindung bezieht sich auf eine an ein Fahrzeug (1) heckseitig anbaubare Straßensperre mit einem senkrechten Warnschild (7) zur Absicherung einer Straßenbaustelle und mit einem Anpralldämpfer (4) gegen Auffahrunfälle, der aus einer horizontalen Einsatzstellung bezüglich einer Querachse (6) um im wesentlichen 90° in eine für Fahrbetrieb geeignete Ruhestellung hochschwenkbar ist, während das Warnschild (7) zwischen Führungsorganen (8) von einer hohen Einsatzstellung in eine tiefere Ruhestellung im wesentlichen vertikal translatorisch bewegbar ist.

Erfindungsgemäß ist die Schwenkbewegung des Anpralldämpfers (4) mit der translatorischen Bewegung des Warnschilds (7) über Seil- oder Kettenzüge (11) so gekoppelt, daß beide zugleich in die jeweilige Einsatz- bzw. Ruhestellung gelangen.

## Beschreibung

Die Erfindung bezieht sich auf eine an ein Fahrzeug heckseitig anbaubare Straßensperre mit einem senkrechten Warnschild zur Absicherung einer Straßenbaustelle und mit einem Anpralldämpfer gegen Auffahrunfälle, der aus einer horizontalen Einsatzstellung bezüglich einer Querachse um im wesentlichen 90° in eine für Fahrbetrieb geeignete Ruhestellung hochschwenkbar ist, während das Warnschild zwischen Führungsorganen von einer hohen Einsatzstellung in eine tiefere Ruhestellung im wesentlichen vertikal translatorisch bewegbar ist.

Zur Absicherung vorübergehender Baustellen, speziell auf Autobahnen, werden Anpralldämpfer eingesetzt, die an Baustellenfahrzeugen heckseitig anbaubar sind. Ein Warnschild mit meist blinkenden Verkehrsleitsymbolen wie Pfeilen überragt das Fahrzeugheck vor dem Anpralldämpfer.

Anpralldämpfer, die bei einem Auffahrunfall die Stoßenergie absorbieren und beide betroffenen Fahrzeuge und deren Insassen vor größeren Schäden bewahren sollen, sind an sich bekannt, beispielsweise aus dem Europäischen Patent 0 674 052 oder dem US-Patent 4 190 275.

Straßensperren gemäß dem Oberbegriff des beiliegenden Anspruchs 1 sind bekannt und auf deutschen Autobahnen im täglichen Einsatz. Deren Anpralldämpfer sollen möglichst lang sein, damit ein ausreichender Bremsweg zur Verfügung steht. Andrerseits ergeben sich für diese Länge Grenzen aus der daraus resultierenden heckseitigen Belastung des Fahrzeugs im Einsatz und auch wegen der Notwendigkeit, den Anpralldämpfer bei Transportfahrten hochkant zu transportieren.

Die Steuerung der Schwenkbewegung des Anpralldämpfers erfordert leistungsstarke elektrische oder hydraulische Antriebe. Das Warnschild, das in der Regel fast so breit wie das Fahrzeug ist, muß sehr genau bei seiner translatorischen Bewegung von der Einsatz- in die Transportstellung geführt werden, um eine Verkantung zu vermeiden. Dies erfordert zwei synchrone Antriebsmittel, die an beiden Seiten des Schilds angreifen. Außerdem erfordert der Übergang von der Einsatz-in die Ruhestellung und umgekehrt zahlreiche Handgriffe, die im Notfall zu viel Zeit beanspruchen. Schließlich sind bei Ausfall der Antriebe mehrere Personen nötig, um die Straßensperre mit Muskelkraft von einer in die andere Stellung zu bringen.

Aufgabe der Erfindung ist es, eine Straßensperre der eingangs genannten Art mit dem Ziel zu verbessern, die Anzahl von Antriebsmitteln und deren erforderliche Antriebsleistung zu verringern sowie einen Einmannbetrieb selbst bei Ausfall der Antriebe zu ermöglichen.

Diese Aufgabe wird bei einer Straßensperre der eingangs genannten Art dadurch gelöst, daß die Schwenkbewegung des Anpralldämpfers mit der translatorischen Bewegung des Warnschilds über Seil- oder Kettenzüge so gekoppelt ist, daß beide zugleich in die jeweilige Einsatz- bzw. Ruhestellung gelangen.

Bezüglich von Merkmalen bevorzugter Ausführungsformen der Erfindung wird auf die Unteransprüche verwiesen.

Die Erfindung wird nun anhand dieses bevorzugten Ausführungsbeispiels und der beiliegenden Zeichnungen näher erläutert.

Figur 1 zeigt schematisch und in Perspektive eine erfindungsgemäße Straßensperre in Einsatzstellung.

Figur 2 zeigt einen Ausschnitt aus der Straßensperre gemäß Figur 1 mit abgenommener Seitenverkleidung.

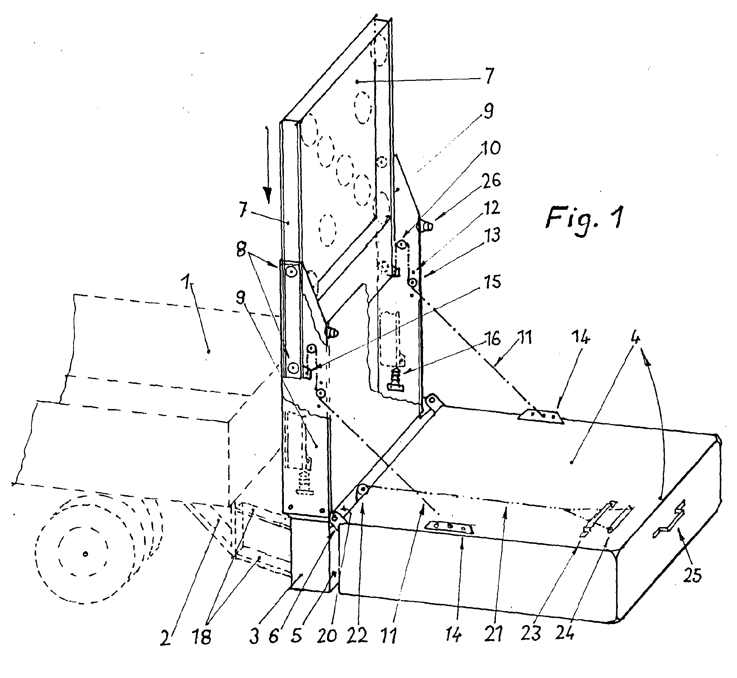

In Figur 1 ist gestrichelt ein Fahrzeug 1 angedeutet, an dessen Rahmen 2 über ein Anbaugestänge 18 die erfindungsgemäße Straßensperre, genauer deren Basisträger 3 angelenkt ist. Sie besteht im wesentlichen aus einem Anpralldämpfer 4, dessen innerer Aufbau beispielsweise dem gleicht, der Gegenstand der oben genannten Patente ist. In der Einsatzstellung, die in Figur 1 gezeigt ist, liegt der Anpralldämpfer waagrecht, d.h. parallel zur Straße und wird knapp über dieser gehalten. Entlang einer Querachse 6 ist der Anpralldämpfer am Basisträger angelenkt und wird über zwei seitliche Seil- oder Kettenzüge 11 in dieser waagrechten Stellung gehalten.

Weiter ist ein Warnschild 7 in zwei vertikalen Schienen 9 geführt, die am Basisträger befestigt sind und eine translatorische Bewegung des Warnschilds 7 von der in Figur 1 zu sehenden Einsatzstellung in eine für den Transport geeignete Ruhestellung erlauben, in der die Unterkante des Warnschilds in beiden Schienen 9 auf justierbaren Anschlägen 16 aufliegen kann. Um die Führung möglichst reibungsarm zu gestalten, sind in bekannter Weise Führungsorgane wie Rollen 8 an den Schienen 9 oder am Rahmen des Warnschilds 7 vorgesehen.

Erfindungsgemäß sind die Bewegungen des Anpralldämpfers 4 und des Warnschilds 7 beim Übergang von einer Stellung in die andere über beidseitig angeordnete Seilzüge 11 miteinander gekoppelt. Diese Seilzüge 11 sind einerseits über ein Koppelglied 15 mit der Unterkante des Warnschilds und andrerseits über Beschläge 14 mit dem Anpralldämpfer 4 verbunden. Diese Beschläge haben mehrere Verankerungspunkte, auf die später eingegangen wird. Von den Koppelgliedern 15 führen diese Seilzüge 11 zuerst nach oben zu ersten Umlenkrollen 10 und dann senkrecht nach unten zu zweiten Umlenkrollen 13, die jeweils an der zugeordneten Schiene 9 montiert sind. Von dort führen die Seilzüge 11 in der in Figur 1 gezeigten Einsatzstellung schräg nach unten zu einem der Ankerpunkte jedes Beschlags 14.

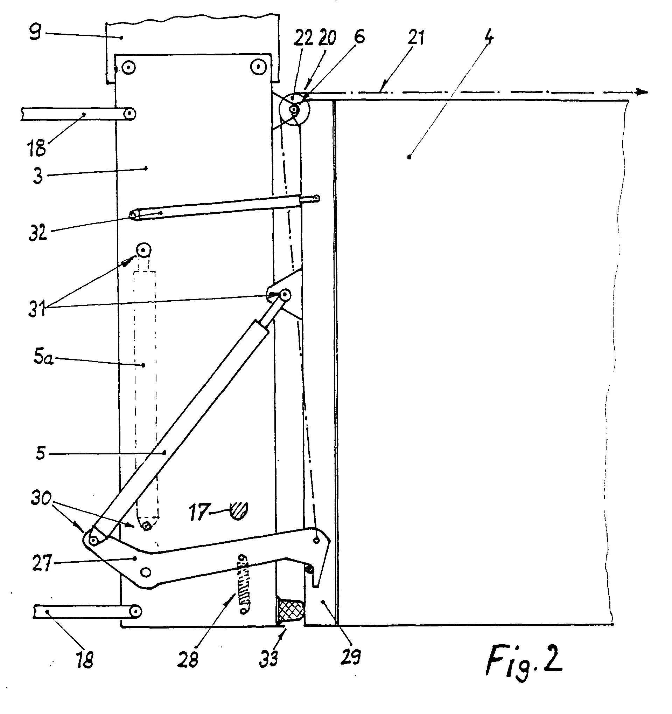

Aus Figur 2, die eine Seitenansicht eines Teils der erfindungsgemäßen Straßensperre in Arbeitsstellung zeigt, und zwar den Bereich des Basisträgers 3, dessen Verkleidung zur besseren Darstellung der Mechanik entfernt wurde, erkennt man eine Sperrklinke 27, die am Basisträger 3 schwenkbar gelagert ist und in der Einsatzstellung der Straßensperre den Anpralldämpfer beziehungsweise seinen stirnseitigen Rahmen 29 gegen einen Anschlagpuffer 33 drückt und so verhindert, daß ein anprallendes Fahrzeug den Anpralldämpfer unterfährt. Eine Feder 28 sichert diese Stellung der Sperrklinke 27. Außerdem erkennt man in Figur 2 einen Hydraulikzylinder 5, der jenseits des Drehpunkts mit der Sperrklinke 27 derart gekoppelt ist, daß bei Aktivierung des Zylinders die Klinke gegen die Federkraft entgegen dem Uhrzeigersinn bis an einen Anschlag 17 gedreht und so entsperrt wird und daß anschließend der Anpralldämpfer durch die Kraft des Hydraulikzylinders bezüglich der Querachse 6 um 90° nach oben in eine für den Transport geeignete Ruhestellung geschwenkt wird.

Die Schwenkbewegung kann durch eine vorgespannte drehelastische Feder 20 im Bereich der Querachse 6 und/oder eine Gasdruckfeder 32 zwischen dem Basisträger 3 und dem Rahmen 29 des Anpralldämpfers 4 unterstützt werden.

Es genügt also eine Person, um den oder die Hydraulikzylinder zu aktivieren und dadurch den Anpralldämpfer in die für einen Transport geeignete Ruhestellung zu bringen. In umgekehrter Richtung bleibt die Sperrklinke in der entsperrten Stellung, bis der Hubzylinder 5 durch das Auftreffen des Rahmens 29 auf dem Anschlagpuffer 33 entlastet wird, und rastet dann durch die Kraft der Feder 28 automatisch ein.

Beim Anheben des Anpralldämpfers gleitet das Warnschild 7 aufgrund seines Gewichts und der Seilzugkopplung mit dem Anpralldämpfer 4 nach unten. Dabei unterstützt die Zugkraft, die dem Gewicht des Warnschilds entspricht, über die Seilzüge die Bewegung des Anpralldämpfers nach oben. Dadurch wird die erforderliche Hubleistung erheblich reduziert. In der Ruhestellung befinden sich die Ankerpunkte der Beschläge 14 in unmittelbarer Nähe der Unterseite der zweiten Umlenkrollen 13, sodaß das Gewichts des Warnschilds über die Seilzüge 11 den Anpralldämpfer in dieser Lage hält. Gegebenenfalls kann noch eine (nicht dargestellte) selbsttätig einrastende und manuell lösbare Sperrklinke zur Sicherung dieser Position des Anpralldämpfers vorgesehen sein.

Die definierte Lage des Anpralldämpfers in der Ruhestellung wird durch an den Schienen 9 angebrachte Anschlagpuffer 26 gewährleistet.

Es kann nützlich sein, eine weitere Ruhestellung vorzusehen, in der das Warnschild auch während des Transports etwas über dem hochgeklappten Anpralldämpfer hervorragt und nachfahrenden Fahrzeugen als Warnschild sichtbar ist. Dies kann erreicht werden, indem die zweiten Umlenkrollen 13 vertikal versetzt werden. Hierzu sind entsprechende Lochreihen 12 in beiden Schienen 9 vorgesehen. Soll das Schild noch sichtbar bleiben, dann setzt man die Rollen 13 in das unterste Loch der Lochreihen 12 ein und benutzt an den Beschlägen 14 entsprechend den der Querachse 6 nächstliegenden Ankerpunkt. Ganz verschwinden kann man dagegen das Warnschild lassen, indem man die Löcher bzw. Ankerpunkte am anderen Ende der Reihe benutzt.

Es sei bemerkt, daß trotz der großen Breite des Warnschilds 7 ein Verkanten nicht zu befürchten ist, da die Parallelführung über die beiden Seilzüge 11 und die Querachse 6 gewährleistet ist.

Da der Übergang von der Einsatz- zur Ruhestellung und umgekehrt auch bei nicht vorhandenem Hydraulikdruck möglich sein muß, ist auch ein Handbetrieb vorzusehen. Dieser wird umso leichter, als die aufzuwendende Muskelkraft zum Anheben des ein hohes Eigengewicht besitzenden Anpralldämpfers 4 wegen der Mitwirkung des antagonistischen Eigengewichts des Warnschilds und gegebenenfalls der passiven Kraftelemente, nämlich der vorgespannten drehelastischen Feder 20 und der Gasdruckfeder 32 erheblich verringert wird. In diesem Fall kann man den Hydraulikzylinder 5, der über lösbare Steckbolzen mit der Sperrklinke 27 und dem Rahmen 29 des Anpralldämpfers verbunden ist, demontieren und an einer Lagerstelle 5a parken. Die Entsperrung der Sperrklinke 27 entgegen der Wirkung der Feder 28 erfolgt in diesem Fall über einen handbetätigten Seilzug 21, der über eine Umlenkrolle 22 bis zu einem Handgriff 24 jenseits eines Haltebügels 23 am äußersten Ende des Anpralldämpfers 4 führt. Es wird also nur eine Person benötigt, die durch Zug am Handgriff 24 die Klinke entriegelt und dann am Griff 25 den Anpralldämpfer anhebt.

Vorteilhafterweise sorgt man dafür, daß das Warnschild in der Einsatzstellung bei einem Auffahrunfall nicht aus seiner Führung gerissen wird. Dazu kann man zumindest einige der Führungsrollen 8 in stoßabsorbierenden Lagern befestigen, sodaß das Warnschild bei einem Stoß aufgrund eines Auffahrunfalls ausweichen kann.

Die Erfindung ist nicht in allen Einzelheiten auf das dargestellte Ausführungsbeispiel beschränkt. So kann man das Antriebsorgan auch vom Anpralldämpfer in den Bereich der Seil- oder (vorzugsweise) Kettenzüge oder eines dieser Züge legen und dort als Motor zum Antrieb einer der Umlenkrollen 10 ausbilden. Dies ist nur möglich, weil erfindungsgemäß wegen der antagonistisch mitwirkenden Schwerkraft des Warnschilds nur eine geringe Motorleistung erforderlich ist. Ein Verkanten des Warnschilds ist auch bei einem Handbetrieb durch die Zwangs-Parallelführung über die Seilzüge nicht zu befürchten.

Im Rahmen der Erfindung könnte man auch zwei Sperrklinken 27 zur Sicherung der Einsatzstellung auf beiden Seiten vorsehen, die gemeinsam gesteuert werden.

## Patentansprüche

1. An ein Fahrzeug (1) heckseitig anbaubare Straßensperre mit einem senkrechten Warnschild (7) zur Absicherung einer Straßenbaustelle und mit einem Anpralldämpfer (4) gegen Auffahrunfälle, der aus einer horizontalen Einsatzstellung bezüglich einer Querachse (6) um im wesentlichen 90° in eine für Fahrbetrieb geeignete Ruhestellung hochschwenkbar ist, während das Warnschild (7) zwischen Führungsorganen (8) von einer hohen Einsatzstellung in eine tiefere Ruhestellung im wesentlichen vertikal translatorisch bewegbar ist, dadurch gekennzeichnet, daß die Schwenkbewegung des Anpralldämpfers (4) mit der translatorischen Bewegung des Warnschilds (7) über Seil- oder Kettenzüge (11) so gekoppelt ist, daß beide zugleich in die jeweilige Einsatz- bzw. Ruhestellung gelangen.

2. Straßensperre nach Anspruch 1, dadurch gekennzeichnet, daß die Warntafel (4) in seitlichen Schienen (9) geführt wird, an denen Umlenkrollen (10, 13) montiert sind, über die die Seil- oder Kettenzüge verlaufen.

3. Straßensperre nach einem der vorstehenden Ansprüche, dadurch gekennzeichnet, daß die Führung des Warnschilds (7) in den Schienen (9) über Rollen (8) erfolgt, von denen zumindest einige in stoßabsorbierenden Lagern befestigt sind, sodaß das Warnschild (7) bei einem Stoß aufgrund eines Auffahrunfalls ausweichen kann.

4. Straßensperre nach einem der vorstehenden Ansprüche, dadurch gekennzeichnet, daß entlang der Querachse (6) drehelastische Federn (20) angeordnet sind, die das Anheben des Anpralldämpfers (4) erleichtern.

5. Straßensperre nach einem der vorstehenden Ansprüche, dadurch gekennzeichnet, daß mindestens eine Gasdruckfeder (32) so angebracht ist, daß sie das Anheben des Anpralldämpfers (4) erleichtert.

6. Straßensperre nach einem der vorstehenden Ansprüche, dadurch gekennzeichnet, daß ein steuerbarer Hydraulikzylinder (5) die Kraft für die Schwenkbewegung des Anpralldämpfers (4) in die Ruhestellung liefert.

7. Straßensperre nach einem der vorstehenden Ansprüche, dadurch gekennzeichnet, daß eine Sperrklinke (27) den Anpralldämpfer (4) in seiner Einsatzstellung sichert.

8. Straßensperre nach Anspruch 6 und 7, dadurch gekennzeichnet, daß die Sperrklinke (27) so mit dem Hydraulikzylinder (5) gekoppelt ist, daß sie entsperrt wird, sobald der Hydraulikzylinder angesteuert wird.
